# EUROPÄISCHE PATENTSCHRIFT

(11) **EP 3 555 657 B1**
(45) Veröffentlichungstag und Bekanntmachung des Hinweises auf die Patenterteilung: **15.04.2026**
(21) Anmeldenummer: 17805206.4
(22) Anmeldetag: 29.11.2017
(51) Int. Cl.: G01S 13/90, G01S 7/40, H01Q 15/14

(54) **SYNTHETIK-APERTUR-RADARVERFAHREN UND SYNTHETIK-APERTUR-RADARSYSTEM**
SYNTHETIC-APERTURE RADAR METHOD AND SYNTHETIC-APERTURE RADAR SYSTEM
PROCÉDÉ RADAR À OUVERTURE SYNTHÉTIQUE ET SYSTÈME RADAR À OUVERTURE SYNTHÉTIQUE

(30) Priorität: 14.12.2016 DE 102016224962
(43) Veröffentlichungstag der Anmeldung: 23.10.2019
(73) Patentinhaber: Deutsches Zentrum für Luft- und Raumfahrt e.V., 51147 Köln (DE)
(72) Erfinder: DÖRING, Björn, 92100 Boulogne-Billancourt (FR); SCHWERDT, Marco, 86938 Schondorf a. Ammersee (DE)
(74) Vertreter: Fink Numrich Patentanwälte PartmbB
(86) Internationale Anmeldenummer: PCT/EP2017/080859
(87) Internationale Veröffentlichungsnummer: WO 2018/108537

(56) Entgegenhaltungen:
- US-A- 2 908 002
- FUJITA M: "Development of a Retrodirective PARC for ALOS/PALSAR Calibration", IEEE TRANSACTIONS ON GEOSCIENCE AND REMOTE SENSING, IEEE SERVICE CENTER, PISCATAWAY, NJ, US, vol. 41, no. 10, 1 October 2003 (2003-10-01), pages 2177 - 2186, XP011102407, ISSN: 0196-2892, DOI: 10.1109/TGRS.2003.814659
- MIGUEL CARO CUENCA ET AL: "Deployment and design of bi-directional corner reflectors for op-timal ground motion monitoring using InSAR", 10TH EUROPEAN CONFERENCE ON SYNTHETIC APERTURE RADAR, 5 June 2014 (2014-06-05), pages 378 - 381, XP055443306, ISBN: 978-3-8007-3607-2
- NNSA: "NEVADA TEST SITE GUIDE", 1 March 2005 (2005-03-01), XP055442906, Retrieved from the Internet <URL:https://www.nnss.gov/docs/docs_LibraryPublications/DOENV_715_Rev1.pdf> [retrieved on 20180122]

## Beschreibung

Die Erfindung betrifft ein Synthetik-Apertur-Radarverfahren zur Fernerkundung der Erdoberfläche sowie ein Synthetik-Apertur-Radarsystem.

Synthetik-Apertur-Radarverfahren, welche auch als SAR-Verfahren bezeichnet werden, ermöglichen die Fernerkundung der Erdoberfläche über die Erfassung von an der Oberfläche reflektierten Radarpulsen, die von einer Radareinrichtung ausgesendet werden, welche sich mit meist konstanter Geschwindigkeit über der Erdoberfläche in einer sog. Azimut-Richtung bewegt. Dabei werden von der Oberfläche Streifen mit einer Breite in der sog. Range-Richtung erfasst, welche sich senkrecht zur Azimut-Richtung erstreckt.

Bei SAR-Verfahren macht man sich die Erkenntnis zu Nutze, dass aufgrund des bewegten Radarsystems die gleichen Bereiche der Erde aus unterschiedlichen Sensorpositionen erfasst werden, wodurch eine Amplituden- und Phaseninformation und schließlich ein Radarbild der Erdoberfläche erhalten werden kann. Es wird somit eine synthetische Apertur in Azimut-Richtung erzeugt.

In SAR-Verfahren wird eine Signalprozessierung genutzt, um aus den anfangs erfassten SAR-Rohdaten entsprechende SAR-Radarbilder zu gewinnen. Zur Erzeugung von aussagekräftigen SAR-Bildern sind dabei verschiedene Kalibrierverfahren bekannt. Bei einer Klasse dieser Verfahren werden einzelne Rückstreu-Elemente mit vorbekannter Position auf der Erdoberfläche und mit vorbekannten Rückstreuparametern erfasst. Durch Abgleich der vorbekannten Rückstreuparametern mit den SAR-Radarbildern erfolgt eine Kalibrierung. Man unterscheidet hierbei unterschiedliche Kalibrierverfahren. Bei der sog. geometrischen Kalibrierung werden die einzelnen Bildpunkte der SAR-Radarbilder mit geographischen Orten der Rückstreu-Elemente auf der Erdoberfläche verknüpft. Im Rahmen einer radiometrischen Kalibrierung werden die Bildpunkte der SAR-Radarbilder mit den bekannten Radarquerschnitten der Rückstreu-Elemente abgeglichen. Kalibrierverfahren für SAR-Systeme sind an sich aus dem Stand der Technik bekannt und werden beispielsweise in den Dokumenten [1] und [2] beschrieben.

Üblicherweise werden zur Kalibrierung von SAR-Radarbildern einzeln aufgestellte passive Winkelreflektoren verwendet. Auf die entsprechenden Rückstreuparameter dieser Winkelreflektoren kann nur bedingt Einfluss genommen werden. Darüber hinaus besteht das Problem, dass solche Winkelreflektoren bei längerwelliger Radarstrahlung oftmals sehr große Abmessungen aufweisen müssen, so dass diese schwierig herzustellen und aufzustellen sind.

Aus dem Stand der Technik sind ferner Rückstreu-Elemente in der Form von aktiven Transpondern bekannt, welche in Antwort auf die empfangene Radarstrahlung aktiv ein Radarecho aussenden. Solche aktiven Transponder sind beispielsweise in dem Dokument [3] beschrieben. Die Rückstreuparameter solcher Transponder können auch nur in gewissen Grenzen beeinflusst werden.

Die Druckschrift [4] beschreibt eine SAR-Kalibrierung unter Verwendung einer Phased-Array-Antenne aus einer Vielzahl von Antennenelementen.

In der Druckschrift [5] ist eine Anordnung aus zwei Winkelreflektoren gezeigt, die als Kalibrationsziele für SAR-Radar genutzt werden. Ein Winkelreflektor ist hin zu einer aufsteigenden Satellitenumlaufbahn und der andere Winkelreflektor ist hin zu einer absteigenden Satellitenumlaufbahn orientiert, wodurch beide Winkelreflektoren niemals gleichzeitig in den SAR-Rohdaten und somit in einer Auflösungszelle der einer Szene sind.

Aufgabe der Erfindung ist es, ein Synthetik-Apertur-Radarverfahren und ein entsprechendes Synthetik-Apertur-Radarsystem zu schaffen, welche es ermöglichen, die SAR-Rohdaten so zu generieren, dass sie sehr spezifisch an den Zweck der nachgeschalteten Signalverarbeitung angepasst sind.

Diese Aufgabe wird durch das Synthetik-Apertur-Radarverfahren gemäß Patentanspruch 1 bzw. das Synthetik-Apertur-Radarsystem gemäß Patentanspruch 7 gelöst. Weiterbildungen der Erfindung sind in den abhängigen Ansprüchen definiert.

Das erfindungsgemäße SAR-Verfahren dient zur Fernerkundung der Erdoberfläche über eine Radareinrichtung, die sich in eine Azimut-Richtung über der Erdoberfläche bewegt, wobei die Radareinrichtung eine Sendeeinrichtung zum Aussenden von Radarpulsen und eine Empfangseinrichtung zum Empfang von Radarechos umfasst. Die Sendeeinrichtung und die Empfangseinrichtung können dabei auf einer gemeinsamen Plattform angeordnet sein, jedoch besteht auch die Möglichkeit, dass diese beiden Einrichtungen auf unterschiedlichen Plattformen, wie z.B. zwei sich synchron bewegenden Satelliten, positioniert sind.

Im erfindungsgemäßen Verfahren werden in einem vorgegebenen Betriebsmodus der Radareinrichtung Radarpulse durch die Sendeeinrichtung ausgesendet und Radarechos durch die Empfangseinrichtung empfangen, wobei für den vorgegebenen Betriebsmodus Auflösungszellen definiert sind, welche Flächensegmente auf der Erdoberfläche mit identischen Abmessungen darstellen und die räumliche Auflösung des vorgegebenen Betriebsmodus repräsentieren. Mit anderen Worten beschreiben die Auflösungszellen das kleinstmögliche Flächensegment, welches in dem vorgegebenen Betriebsmodus gerade noch räumlich aufgelöst werden kann. Vorzugsweise handelt es sich bei den Auflösungszellen um Rechtecke mit einer Kante in Azimut-Richtung und einer Kante senkrecht zur Azimut-Richtung (d.h. in Range-Richtung).

In dem vorgegebenen Betriebsmodus werden SAR-Rohdaten durch den Empfang von Radarechos erfasst. Diese Radarechos stammen von einer oder mehreren auf der Erdoberfläche installierten Rückstreu-Anordnungen aus jeweils mehreren Rückstreu-Elementen, wobei sich die rückgestreuten Radarechos aller Rückstreu-Elemente einer jeweiligen Rückstreu-Anordnung überlagern. Mit anderen Worten sind die Rückstreu-Anordnungen mit ihren Rückstreu-Elementen dediziert durch Menschen in einem vorbestimmten Muster aufgestellt worden. Bei den Rückstreu-Elementen handelt es sich um passive Rückstreu-Elemente, welche die Radarechos rein durch Reflexion erzeugen. In einer nicht zur Erfindung gehörigen Ausführungsform sind die Rückstreu-Elemente aktive Rückstreu-Elemente in der Form sog. Transponder, welche in Antwort auf ein empfangenes Radarsignal aktiv ein entsprechendes Radarecho aussenden. Die Rückstreu-Elemente jeder Rückstreu-Anordnung sind derart zueinander positioniert, dass alle Rückstreu-Elemente der jeweiligen Rückstreu-Anordnung innerhalb einer Auflösungszelle liegen. Darüber hinaus weist jede Rückstreu-Anordnung einen oder mehrere vorbekannte Rückstreuparameter auf, die sich aus der deterministischen Aufstellung der Rückstreu-Elemente ergeben.

Erfindungsgemäß umfasst eine jeweilige Rückstreu-Anordnung von zumindest einem Teil der Rückstreu-Anordnungen mehrere Teilgruppen aus jeweils zumindest zwei Rückstreu-Elementen, wobei eine jeweilige Teilgruppe durch eine Gerade charakterisiert ist, auf der alle Rückstreu-Elemente der jeweiligen Teilgruppe liegen und welche in Azimut-Richtung verläuft. Dabei sind die Geraden von zumindest zwei Teilgruppen und insbesondere aller Teilgruppen in Richtung senkrecht zur Azimut-Richtung versetzt zueinander angeordnet.

Erfindungsgemäß umfasst die jeweilige Rückstreu-Anordnung ein Paar von Teilgruppen, die unterschiedliche Abschnitte in Azimut-Richtung abdecken und/oder die auf Geraden angeordnet sind, welche um 1/4 der Wellenlänge der Radarstrahlung der Radareinrichtung in der Richtung senkrecht zur Azimut-Richtung zueinander versetzt sind. Über den Versatz um 1/4 der Wellenlänge können spezielle Rückstreudiagramme mit einer Einkerbung (sog. Notch-Pattern) generiert werden. Gegebenenfalls kann die Rückstreu-Anordnung auch nur aus einem Paar der soeben beschriebenen Teilgruppen bestehen .

Im Rahmen des erfindungsgemäßen Verfahrens werden die SAR-Rohdaten einer Signalverarbeitung unterzogen, welche die Erzeugung von SAR-Radarbildern der Erdoberfläche aus den SAR-Rohdaten umfasst. Diese Signalverarbeitung ist von dem oder den obigen Rückstreuparametern abhängig. Diese Rückstreuparameter ergeben sich u.a. aus der geometrischen Anordnung der Rückstreu-Elemente.

Die Erfindung beruht auf der Erkenntnis, dass durch Positionierung von Rückstreu-Elementen innerhalb einer Auflösungszelle neuartige Punktziele mit definierten Rückstreu-Eigenschaften geschaffen werden können, wobei diese Rückstreu-Eigenschaften in geeigneter Weise in die Signalprozessierung einfließen. Mit anderen Worten können die SAR-Rohdaten derart generiert werden, dass sie an die Art der Signalprozessierung angepasst sind.

Der obige Begriff der Rückstreuparameter ist weit zu verstehen und betrifft solche Merkmale, welche das Rückstreuverhalten der Rückstreu-Anordnung charakterisieren. Vorzugsweise umfassen der oder die vorbekannten Rückstreuparameter jeder Rückstreu-Anordnung den Radarquerschnitt der jeweiligen Rückstreu-Anordnung für die ausgesendeten Radarpulse. Die Definition des Radarquerschnitts ist an sich bekannt und dieser Querschnitt hängt unter anderem von der Wellenlänge und dem Winkel der einfallenden Strahlung ab. Der Radarquerschnitt kann aus einer bekannten Positionierung und aus bekannten Eigenschaften der Rückstreu-Elemente abgeleitet werden. Alternativ oder zusätzlich umfassen der oder die vorbekannten Rückstreuparameter das Rückstreudiagramm bzw. das Phasendiagramm der jeweiligen Rückstreu-Anordnung für die ausgesendeten Radarpulse, d.h. die winkelabhängige (betragsmäßige) Amplitude bzw. die winkelabhängige Phase der rückgestreuten Radarstrahlung. Alternativ oder zusätzlich umfassen der oder die vorbekannten Rückstreuparameter die Position der Rückstreuzentren der Rückstreu-Elemente der jeweiligen Rückstreu-Anordnung auf der Erdoberfläche. Gegebenenfalls kann hieraus eine gemittelte Position des Rückstreuzentrums für die gesamte Rückstreu-Anordnung ermittelt werden. Je nach Art der Signalverarbeitung werden unterschiedliche der genannten Rückstreuparameter weiterverarbeitet.

In einer besonders bevorzugten Ausführungsform umfasst die Signalverarbeitung eine Kalibrierung der SAR-Radarbilder, bei der die SAR-Radarbilder mit dem oder den vorbekannten Rückstreuparametern abgeglichen werden. Die Kalibrierung kann insbesondere eine radiometrische Kalibrierung und/oder eine geometrische Kalibrierung und/oder eine polarimetrische Kalibrierung umfassen. All diese Kalibriermethoden sind an sich aus dem Stand der Technik bekannt und werden deshalb nicht näher beschrieben. Erfindungswesentlich ist dabei, dass nunmehr Rückstreuparameter von neuartigen Punktzielen in der Form der oben definierten Rückstreu-Anordnungen im Rahmen der Kalibrierung verarbeitet werden. Bei der geometrischen Kalibrierung werden Orte auf der Erdoberfläche, die erfindungsgemäß den Positionen von Rückstreu-Anordnungen entsprechen, mit entsprechenden Bildpunkten der SAR-Radarbilder verknüpft. Bei der radiometrischen Kalibrierung werden die SAR-Radarbilder mit Zielen mit bekannten Radarquerschnitten verglichen, welche erfindungsgemäß die Rückstreu-Anordnungen darstellen. Bei der polarimetrischen Kalibrierung wird die Rückstreuung in Abhängigkeit von den Polarisationen der Radarstrahlen unterschieden.

Neben der Anwendung der Kalibrierung kann das erfindungsgemäße Verfahren gegebenenfalls auch für andere Zwecke verwendet werden, z.B. zur Orbitbestimmung von Satelliten, auf denen sich die Radareinrichtung befindet, oder zur Zielidentifikation, bei der mittels einer an die vorbekannten Rückstreuparameter angepassten Signalverarbeitung Ziele erkannt werden können, auf denen die entsprechende Rückstreu-Anordnung angeordnet ist. Bei der Orbitbestimmung und bei der Zielidentifikation werden die stark winkelabhängigen Rückstreudiagramme mehrerer installierter Rückstreu-Anordnungen genutzt.

In einer bevorzugten Ausführungsform sind die passiven Reflektoren Winkelreflektoren, d.h. Objekte mit zumindest zwei senkrecht aufeinander stehenden Reflexionsflächen, welche in der Regel aus Metall (z.B. Aluminium) bestehen.

Als Winkelreflektoren können beispielsweise dihedrale Winkelreflektoren mit zwei planen Reflexionsflächen oder auch trihedrale Winkelreflektoren mit drei planen Reflexionsflächen und gegebenenfalls auch bruderhedrale Winkelreflektoren eingesetzt werden. Bruderhedrale Winkelreflektoren umfassen eine Reflexionsfläche in der Form eines Zylinders, an dessen einem Ende sich eine ringförmige Reflexionsfläche senkrecht zur Achse des Zylinders nach außen erstreckt. Ein bruderhedraler Reflektor kann dabei gegebenenfalls auch ein Segment eines Zylinders mit daran angeordneter ringförmiger Reflexionsfläche sein. Bei Verwendung von Winkelreflektoren hat die längste Kante des jeweiligen Winkelreflektors vorzugsweise eine Länge von mindestens dem Fünffachen, besonders bevorzugt von mindestens dem Zehnfachen, der Wellenlänge der Radarstrahlung.

In einer nicht zur Erfindung gehörigen Ausführungsform sind alle oder zumindest ein Teil der Rückstreu-Elemente aktive Transponder, die in Abhängigkeit von den empfangenen Radarstrahlen aktiv ein Radarecho aussenden.

In einer bevorzugten Variante sind die Rückstreu-Elemente einer jeweiligen Rückstreu-Anordnung von zumindest einem Teil der Rückstreu-Anordnungen in gleichmäßigem Abstand in Azimut-Richtung und/oder senkrecht zur Azimut-Richtung angeordnet.

In einer weiteren bevorzugten Ausführungsform liegen alle Rückstreu-Elemente einer jeweiligen Rückstreu-Anordnung von zumindest einem Teil der Rückstreu-Anordnungen auf einer Geraden, welche in Azimut-Richtung verläuft.

In einer bevorzugten Variante decken die obigen Teilgruppen aneinander angrenzender Abschnitte in Azimut-Richtung ab, wobei das Rückstreu-Element an einem Ende des zugeordneten Abschnitts die gleiche Azimut-Position aufweist wie das Rückstreu-Element am Anfang des angrenzenden Abschnitts. In einer weiteren Variante umfassen die jeweiligen Teilgruppen die gleiche Anzahl von Rückstreu-Elementen. Ferner kann eine Rückstreu-Anordnung aus zwei Teilgruppen von Rückstreu-Elementen bestehen, welche aneinander angrenzende Abschnitte in Azimut-Richtung abdecken, wobei die Rückstreu-Elemente der unterschiedlichen Teilgruppen auf Geraden angeordnet sind, die senkrecht zur Azimut-Richtung versetzt zueinander positioniert sind. Vorzugsweise sind dabei alle Rückstreu-Elemente der Rückstreu-Anordnung in Azimut-Richtung in gleichmäßigem Abstand positioniert und vorzugsweise enthält jede Teilgruppe die gleiche Anzahl an Rückstreu-Elementen. Hierdurch wird die Ausbildung einer Einkerbung im Rückstreudiagramm in der Hauptstrahlrichtung erreicht, sofern der Versatz der beiden Geraden bei 1/4 der Wellenlänge der Radarstrahlung liegt.

Das erfindungsgemäße Verfahren kann für beliebige Betriebsmodi mit unterschiedlich großen Auflösungszellen eingesetzt werden. In einer bevorzugten Variante liegt die Ausdehnung einer jeweiligen Auflösungszelle in Azimut-Richtung zwischen 0,24 m und 500 m, wohingegen die Ausdehnung der Auflösungszelle senkrecht zur Azimut-Richtung vorzugsweise zwischen 0,6 m und 500 m liegt. Die Auflösungszelle ist dabei vorzugsweise ein Rechteck mit Kanten parallel und senkrecht zur Azimut-Richtung. Mit den genannten Ausdehnungen werden typische bekannte räumliche Auflösungen von im Betrieb befindlichen bzw. geplanten SAR-Missionen abgedeckt. Im Folgenden werden die Ausdehnungen von rechteckigen Auflösungszellen für verschiedene Missionen angegeben:
- TerraSAR-X:
   Azimut: 0,24 m bis 40 m
   Range: 0,6 m bis 3,3 m
- Sentinel-1:
   Azimut: 5 m bis 40 m
   Range: 5 m bis 20 m
- BIOMASS:
   Die Auflösungszellen sollten eine Abmessung von 50 m oder weniger in Azimut-Richtung und von 50 m oder weniger in Range-Richtung aufweisen.
- Tandem-L:
   Die Auflösung sollte sowohl in Azimut-Richtung als auch in Range-Richtung zwischen 5 m und 500 m liegen.

Neben dem oben beschriebenen Verfahren betrifft die Erfindung ein Synthetik-Apertur-Radarsystem zur Fernerkundung der Erdoberfläche, umfassend eine Radareinrichtung, die sich im Betrieb in Azimut-Richtung über der Erdoberfläche bewegt, wobei die Radareinrichtung eine Sendeeinrichtung zum Aussenden von Radarpulsen und eine Empfangseinrichtung zum Empfang von Radarechos umfasst. Das Synthetik-Apertur-Radarsystem ist dabei derart ausgestaltet, dass mit diesem System das erfindungsgemäße Verfahren bzw. eine oder mehrere bevorzugte Varianten des erfindungsgemäßen Verfahrens durchführbar sind. Die im erfindungsgemäßen Verfahren definierte Rückstreu-Anordnung ist somit Bestandteil des Synthetik-Apertur-Radarsystems. Die erfindungsgemäße Signalverarbeitung wird im Radarsystem über eine Rechnereinrichtung durchgeführt. Je nach Ausgestaltung kann die Rechnereinrichtung auf der Plattform angeordnet sein, auf der sich die Radareinrichtung befindet, oder sie kann auch in einer Bodenstation integriert sein, an der die SAR-Rohdaten der Radareinrichtung übermittelt werden. Ebenso ist es möglich, dass ein Teil der Signalverarbeitung durch eine Rechnereinrichtung auf der Plattform der Radareinrichtung und ein anderer Teil der Signalverarbeitung durch eine Rechnereinrichtung in einer Bodenstation durchgeführt werden.

Ausführungsbeispiele der Erfindung werden nachfolgend anhand der beigefügten Figuren detailliert beschrieben.

Es zeigen:
- Fig. 1: eine schematische Darstellung, anhand der das im Rahmen der Erfindung verwendete SAR-Prinzip erläutert wird;
- Fig. 2: eine Darstellung einer Ausführungsform einer verwendbaren Rückstreu-Anordnung und der zu dieser Anordnung gehörenden Rückstreuparameter;
- Fig. 3: eine Darstellung einer zweiten Ausführungsform einer im erfindungsgemäßen Verfahren verwendbaren Rückstreu-Anordnung und der zu dieser Anordnung gehörenden Rückstreuparameter; und
- Fig. 4: eine schematische Draufsicht in Radarstrahlrichtung, welche eine mögliche Ausgestaltung der Rückstreu-Elemente der Ausführungsform der Fig. 3 wiedergibt.

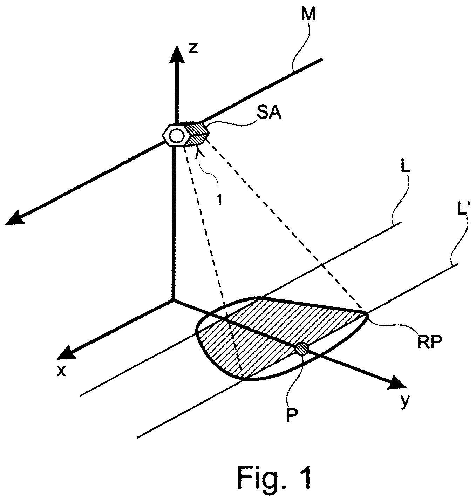

Zum besseren Verständnis wird zunächst anhand von Fig. 1 das Prinzip der SAR-Messung anhand der von einem Satelliten ausgesendeten Radarstrahlung erläutert. Der in Fig. 1 dargestellte Satellit ist mit dem Bezugszeichen SA angedeutet und bewegt sich in Richtung des dargestellten Pfeils M, welcher der x-Richtung des in Fig. 1 wiedergegebenen kartesischen Koordinatensystems entspricht. Diese x-Richtung wird üblicherweise auch als Azimut bezeichnet. Der Satellit SA, dessen Höhe über der Erdoberfläche durch die z-Koordinate des Koordinatensystems repräsentiert wird, umfasst eine Radareinrichtung 1, welche schematisch als Antenne angedeutet ist und eine Sendeeinrichtung sowie eine Empfangseinrichtung (nicht separat gezeigt) beinhaltet. Gegebenenfalls können auch eine Sendeeinrichtung und eine Empfangseinrichtung genutzt werden, welche sich auf unterschiedlichen Satelliten befinden, die sich synchron zueinander bewegen.

Die Sendeeinrichtung des Satelliten SA sendet während seiner Bewegung kontinuierlich mit einer vorbestimmten Pulswiederholfrequenz Radarpulse in Richtung zur Erdoberfläche aus, wobei die Kontur eines gerade ausgesendeten Radarpulses auf der Erdoberfläche mit RP bezeichnet ist. Von jedem ausgesendeten Radarpuls wird das Radarecho erfasst, indem die an der Erdoberfläche reflektierte Radarstrahlung in die Richtung y des kartesischen Koordinatensystems abgetastet wird. Die Richtung y wird üblicherweise auch als Range bezeichnet. In dem dargestellten Ausführungsbeispiel werden bei der Auswertung der Radarechos nur Informationen der Radarstrahlung zwischen den beiden Linien L und L' berücksichtigt, die einen Abstand von mehreren Kilometern (z.B. 30 km) aufweisen. Dies wird auch durch den schraffierten Bereich innerhalb des Radarpulses RP angedeutet. Als Rohdaten der SAR-Messung erhält man für eine Vielzahl von Radarpulsen und somit für eine Vielzahl von Azimut-Positionen jeweils eine Vielzahl von analogen Datenabtastungen (auch als Datensamples bezeichnet), welche jeweils einer Range-Position entsprechen.

Das Prinzip der SAR-Messung beruht nunmehr darauf, dass jeweilige Punkte auf der Erdoberfläche mehrfach aus unterschiedlichen Blickwinkeln aufgrund der Bewegung des Satelliten SA erfasst werden. Dies wird in Fig. 1 für den Punkt P verdeutlicht. Dieser Punkt P weist in dem dargestellten Szenario den geringstmöglichen Abstand zum Satelliten SA auf. Durch Bewegung des Satelliten in Richtung M wird dieser Abstand immer größer. Vor Erreichen der in Fig. 1 dargestellten Position wurde dieser Abstand immer kleiner. Aufgrund des Doppler-Effekts kommt es bei der Erfassung des Radarechos zu einer Frequenzverschiebung, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die erhaltenen Bildpunkte stellen ein SAR-Radarbild des erfassten Oberflächenbereichs der Erdoberfläche dar. Die entsprechende Berechnung von Bildpunkten der Erdoberfläche aus SAR-Rohdaten ist dem Fachmann hinlänglich bekannt und wird deshalb nicht weiter im Detail erläutert. Mit dem SAR-Messverfahren wird durch eine Vielzahl von Radarpulsen eines Radarsenders kleiner Apertur eine größere synthetische Apertur entsprechend der Ausdehnung des Radarpulses auf der Erdoberfläche simuliert.

Das Wesen der Erfindung beruht darauf, dass mit einer SAR-Radarvorrichtung, wie sie beispielsweise in Fig. 1 gezeigt ist, eine und gegebenenfalls auch mehrere Rückstreu-Anordnungen erfasst werden, welche von Menschen auf der Erdoberfläche installiert wurden und mehrere Rückstreu-Elemente mit vorbestimmten Abständen und Abmessungen umfassen. Die Abstände zwischen den einzelnen Rückstreu-Elementen sind dabei derart gewählt, dass sie in eine Auflösungszelle des gerade verwendeten Betriebsmodus der SAR-Radareinrichtung passen. Die Auflösungszellen decken dabei den erfassten Bereich der Erdoberfläche in der Form von aneinander angrenzenden (nicht-überlappenden) Flächensegmenten identischer Größe ab. Die Flächensegmente sind vorzugsweise Rechtecke und die Größe eines Flächensegments entspricht der räumlichen Ausdehnung, welche durch die Radareinrichtung noch aufgelöst werden kann. Mit anderen Worten stellt somit eine Rückstreu-Anordnung für die SAR-Radareinrichtung ein Punktziel dar, da die einzelnen Rückstreuer aufgrund ihres Abstands, der geringer als die Größe einer Auflösungszelle ist, nicht mehr aufgelöst werden können.

Die einzelnen Rückstreu-Elemente der Rückstreu-Anordnung sind in einem vorgegebenen Muster angeordnet und auch die Reflexionseigenschaften der einzelnen Rückstreu-Elemente sind bekannt, so dass es vorbekannte Rückstreuparameter für die entsprechende Rückstreu-Anordnung gibt. In der hier beschriebenen Ausführungsform umfassen diese Rückstreuparameter den Radarquerschnitt und das Rückstreudiagramm der gesamten Rückstreu-Anordnung sowie die Position der Rückstreuzentren der einzelnen Rückstreu-Elemente. Diese Größen können aus dem Anordnungsmuster der Rückstreu-Elemente sowie den Informationen über den Aufbau der einzelnen Elemente ermittelt werden.

Konzeptionell können die im erfindungsgemäßen Verfahren verwendeten Rückstreu-Anordnungen jeweils als ein Rückstreuziel aufgefasst werden, das zwischen einem Punktziel und einem verteilten Punktziel liegt, wobei es erfindungswesentlich ist, dass die einzelnen Rückstreu-Elemente nicht zufällig verteilt sind, sondern in einem vorbestimmten Muster angeordnet sind, so dass Rückstreuparameter von dieser Anordnung vorbekannt sind. Die Antwort einer Rückstreu-Anordnung auf einen Radarpuls ist somit deterministisch und wird in der hier beschriebenen Ausführungsform der Erfindung zur Kalibrierung von SAR-Radarbildern genutzt.

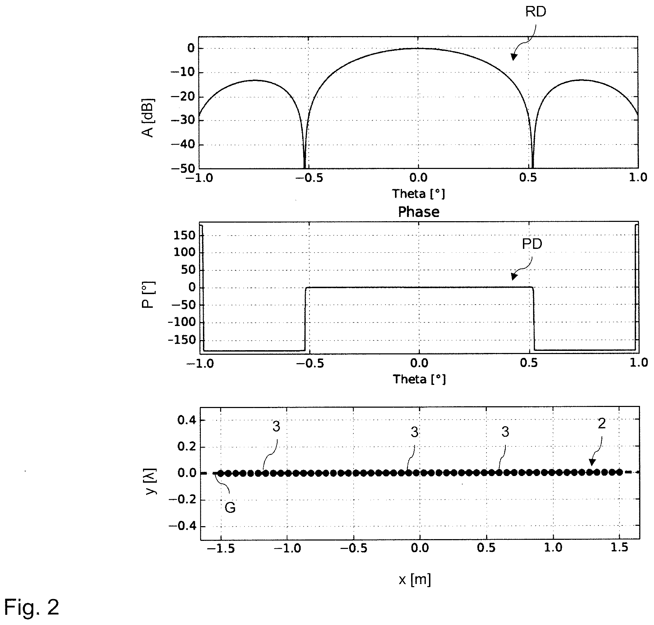

Fig. 2 zeigt eine Rückstreu-Anordnung. Im untersten Diagramm der Fig. 2 ist dabei eine Draufsicht auf die Rückstreu-Anordnung dargestellt, wobei die Abszisse dieses Diagramms die Azimut-Richtung x ist und die Ordinate die Range-Richtung y darstellt. Die Azimut-Richtung ist in Metern angegeben, wohingegen die Range-Richtung als Anteil der Wellenlänge λ der Radarstrahlung dargestellt ist. Die Rückstreu-Anordnung ist mit Bezugszeichen 2 bezeichnet und umfasst 54 gleichmäßig beabstandete trihedrale Winkelreflektoren, die nur schematisch angedeutet sind und aus Übersichtlichkeitsgründen nur zum Teil mit dem Bezugszeichen 3 versehen sind. In dem gezeigten Ausführungsbeispiel sind alle Winkelreflektoren entlang einer Geraden G angeordnet, welche in Azimut-Richtung verläuft.

Bei der Verwendung einer Radarstrahlung im C-Band (f = 5,405 GHz) ergibt sich die im mittleren Diagramm der Fig. 2 gezeigte Phasencharakteristik PD, welche die Phase P des rückgestreuten Radarechos in Abhängigkeit vom Azimut-Winkel Theta für den Fall angibt, dass sich die Radareinrichtung an der Position x = 0 im untersten Diagramm befindet. Der Azimut-Winkel repräsentiert die Neigung in Bezug auf die Azimut-Richtung, gemessen ausgehend von der Geraden zwischen Radareinrichtung und der mittleren Position der Rückstreu-Anordnung (d.h. x = 0). Wie man erkennt, treten dabei Phasensprünge durch destruktive Überlagerung der reflektierten Radarwellen bei in etwa -0,5° und +0,5° auf.

Das oberste Diagramm der Fig. 2 zeigt für obige Radarstrahlung im C-Band das Rückstreudiagramm RD der Rückstreu-Anordnung in der Form der (betragsmäßigen) Amplitude A des empfangenen Radarechos in Abhängigkeit vom Azimut-Winkel Theta. Wie man erkennt, ist die Amplitude des Radarechos in der Hauptrückstreurichtung (Theta = 0°) maximal und sinkt durch destruktive Überlagerung der reflektierten Radarwellen bei 0,5° und -0,5° auf Null ab. Neben den Phasendiagramm PD und dem Rückstreudiagramm RD sind von der Rückstreu-Anordnung ferner die Rückstreuzentren der Rückstreu-Elemente 3 sowie der Radarquerschnitt der gesamten Rückstreu-Anordnung für die empfangene Radarstrahlung bekannt. Diese Informationen stammen aus dem Wissen über den Aufbau der Rückstreu-Elemente und deren Positionierung auf der Erdoberfläche.

In der hier beschriebenen Ausführungsform wird mit den bekannten Rückstreuparametern der Anordnung eine Kalibrierung der SAR-Radarbilder durchgeführt. Dabei kann sowohl eine geometrische Kalibrierung als auch eine radiometrische Kalibrierung durchgeführt werden. Im Rahmen der geometrischen Kalibrierung werden den einzelnen Bildpunkten der SAR-Bilder geographische Orte auf der Erdoberfläche zugewiesen. Hierzu wird die Information über die Position der Rückstreuzentren der Rückstreu-Elemente 3 genutzt, woraus ein gemitteltes Rückstreuzentrum für die gesamte Rückstreu-Anordnung 2 und somit eine Position für diese gesamte Rückstreu-Anordnung auf der Erdoberfläche ermittelt werden kann. Im Rahmen der radiometrischen Kalibrierung werden die Pixelintensitäten der SAR-Radarbilder mit dem Radarquerschnitt der Rückstreu-Anordnung 2 abgeglichen. Es erfolgt somit eine Verarbeitung der SAR-Bilder unter Berücksichtigung von vorbekannten Rückstreuparametern der Anordnung der Fig. 2.

Neben der geometrischen und radiometrischen Kalibrierung können mit den bekannten Rückstreuparametern auch weitere Verarbeitungsprozesse der SAR-Radarbilder durchgeführt werden, wie z.B. die Bestimmung der Antennen-Zeigerichtung (englisch: "antenna pointing determination"), die auch eine Art von Kalibrierung darstellt. Die genannten Kalibrierverfahren sind an sich aus dem Stand der Technik bekannt und beispielsweise in den bereits eingangs erwähnten Druckschriften [1] und [2] beschrieben.

Ein weiteres Beispiel einer Signalverarbeitung der SAR-Radarbilder unter Rückgriff auf die vorbekannten Rückstreuparameter der deterministischen Anordnung von Rückstreu-Elementen ist die Zielidentifikation von Objekten, auf denen eine entsprechende Rückstreu-Anordnung angeordnet ist. Dabei können die Objekte nur dann geeignet identifiziert werden, wenn die Signalverarbeitung der SAR-Radarbilder das Wissen über die Rückstreuparameter der Rückstreu-Anordnung nutzt. Die Zielidentifikation von Objekten kann beispielsweise im militärischen Bereich genutzt werden und entsprechende Verfahren zur Zielidentifikation sind an sich bekannt.

Durch die Verwendung von geeigneten Rückstreu-Elementen, welche einen von der Polarisation der Radarstrahlung abhängigen Radarquerschnitt aufweisen, kann ferner eine an sich bekannte polarimetrische Kalibrierung in Abhängigkeit von den Polarisationen der Radarstrahlung durchgeführt werden. Für die polarimetrische Kalibrierung eignen sich vor allem Rückstreu-Elemente in der Form von dihedralen Winkelreflektoren, da diese die Polarisation der Radarstrahlung nach Reflexion verändern. Im Besonderen kann in einer Rückstreu-Anordnung durch Verdrehung von einzelnen dihedralen Winkelreflektoren zueinander ein Punktziel erreicht werden, dessen polarimetrische Antwort sich über den Einfallswinkel signifikant ändert.

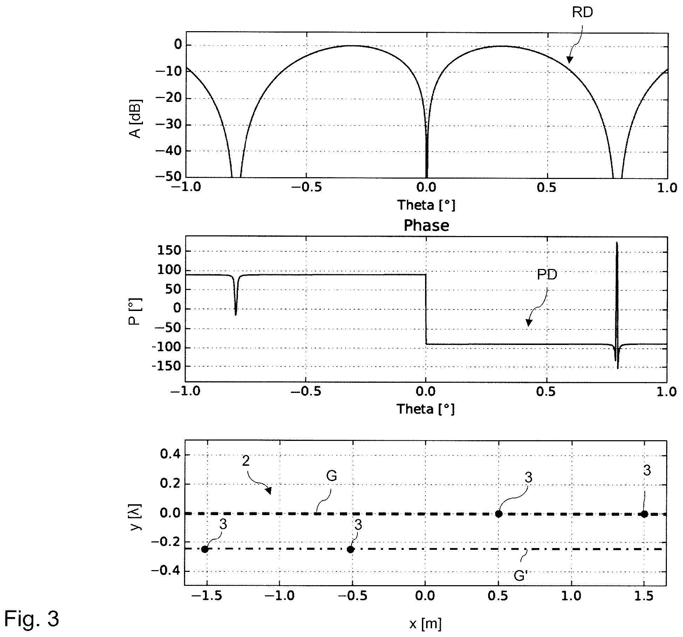

Fig. 3 zeigt eine Ausführungsform einer Rückstreu-Anordnung, welche im erfindungsgemäßen Verfahren verwendet werden kann. Die in Fig. 3 dargestellten Diagramme entsprechen dabei den Diagrammen der Fig. 2, so dass deren Beschriftung nicht nochmals erläutert wird. Im Unterschied zur Rückstreu-Anordnung der Fig. 2 umfasst die Anordnung 2 der Fig. 3 nunmehr lediglich vier Rückstreu-Elemente 3, welche wiederum als trihedrale Winkelreflektoren ausgestaltet sind. Die Rückstreu-Elemente sind in dem Ausführungsbeispiel der Fig. 3 auf zwei zueinander versetzten Geraden G und G' angeordnet, die in Azimut-Richtung x verlaufen. Die beiden linken Rückstreu-Elemente sind dabei um den Abstand λ/4 in Range-Richtung y gegenüber den beiden rechten Rückstreu-Elementen versetzt. Wie sich aus dem mittleren Diagramm der Fig. 3 ergibt, führt dies aufgrund der destruktiven Überlagerung der Radarstrahlung zu einem Phasensprung von 180° beim Azimut-Winkel Theta von 0°. Dies hat wiederum zur Folge, dass das Rückstreudiagramm RD ein sog. Notch-Pattern ist, welches eine Einkerbung beim Azimut-Winkel von 0° aufweist. Mit einem solchen Notch-Pattern kann analog zur Ausführungsform der Fig. 2 eine Signalverarbeitung der SAR-Radarbilder zur Kalibrierung oder für andere Zwecke durchgeführt werden. Im Besonderen eignet sich ein Notch-Pattern auch zur Bestimmung der Antennen-Zeigerichtung. Ein solches Notch-Pattern wird bereits in der Druckschrift [1] verwendet, wobei das Notch-Pattern dort jedoch nicht durch das Rückstreudiagramm, sondern durch das Antennendiagramm erzeugt wird.

In einer weiteren bevorzugten Ausführungsform wird im Rahmen der Erfindung eine Rückstreu-Anordnung eingesetzt, welche einen einzelnen Rückstreuer für eine Radarstrahlung im langwelligen P-Band (Frequenzen von 230 MHz bis 1 GHz) simuliert. Je langwelliger die Radarstrahlung ist, desto größer muss ein einzelner Reflektor zur Verwendung für Kalibrierzwecke ausgestaltet sein. Vorzugsweise sollte die Kantenlänge eines trihedralen Winkelreflektors bei mindestens 10λ liegen, so dass ein einzelner Reflektor Kantenlängen im Bereich von mehreren Metern aufweisen müsste. Um dies zu umgehen, kann eine Rückstreu-Anordnung eingesetzt werden, welche durch die Positionierung von mehreren Reflektoren mit kleineren Kantenlängen ein Rückstreudiagramm generiert, das ähnlich dem Rückstreudiagramm eines großen Reflektors genutzt werden kann.

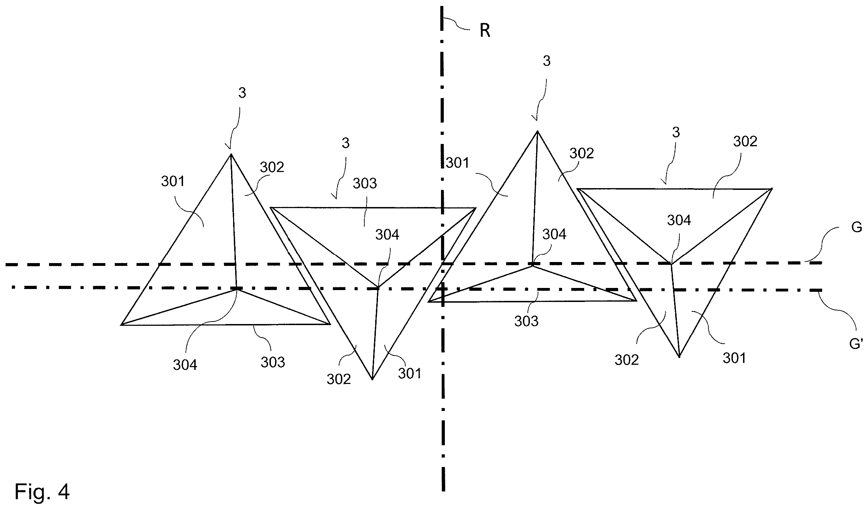

Fig. 4 zeigt in schematischer Draufsicht in Richtung der empfangenen Radarstrahlung den konkreten Aufbau der vier Reflektoren aus Fig. 3. Wie man erkennt, handelt es sich bei den vier Reflektoren 3 um trihedrale Winkelreflektoren mit drei als Dreieck ausgestalteten metallischen Seiten 301, 302 und 303, welche alle in einem 90°-Winkel aufeinander stehen. Die Dreiecke erstrecken sich dabei in die Blattebene der Fig. 4 hinein und enden an einer gemeinsamen Spitze 304, welche das Rückstreuzentrum des jeweiligen Winkelreflektors darstellt. Die Rückstreuzentren der beiden linken Winkelreflektoren sind auf der Geraden G' angeordnet, die sich in Azimut-Richtung erstreckt. Demgegenüber sind die Rückstreuzentren der beiden rechten Winkelreflektoren auf der Geraden G angeordnet, welche versetzt und parallel zur Geraden G' verläuft. Der Versatz der Geraden liegt dabei bei λ/4, wie bereits in Bezug auf Fig. 3 erläutert wurde. Die senkrecht zur Azimut-Richtung verlaufende Range-Richtung ist zur Verdeutlichung in Fig. 4 durch die Linie R wiedergegeben.

Die Anordnung der einzelnen trihedralen Winkelreflektoren wurde in Fig. 4 sehr kompakt gewählt, indem benachbarte Winkelreflektoren jeweils um einen Winkel um 180° um die entsprechenden Rückstreuzentren 304 verdreht sind.

Die obigen Ausführungsbeispiele von Rückstreu-Anordnungen sind lediglich beispielhaft und es sind auch andere Anordnungen möglich, wobei es erfindungswesentlich ist, dass die einzelnen Rückstreu-Elemente innerhalb einer Auflösungszelle deterministisch nach einem vorbestimmten Muster angeordnet sind, so dass bestimmte Rückstreu-Eigenschaften der Rückstreu-Anordnung bekannt sind und im Rahmen einer Prozessierung der SAR-Radarbilder und insbesondere zur Kalibrierung genutzt werden können.

Die im Vorangegangenen beschriebene Erfindung weist eine Reihe von Vorteilen auf. Insbesondere können über die Anordnung von mehreren Rückstreu-Elementen innerhalb einer Auflösungszelle eines SAR-Systems Punktziele mit einstellbar winkelabhängigen Rückstreumustern geschaffen werden. Die Rückstreumuster können dabei geeignet eingestellt werden, um beispielsweise eine effiziente Kalibrierung von SAR-Radarbildern durchzuführen. Im Besonderen können die Rückstreumuster ggf. auch eine scharfe Einkerbung in der Hauptstrahlrichtung aufweisen, wie dies im Ausführungsbeispiel der Fig. 3 gezeigt ist. Diese Eigenschaft kann für die bereits oben erwähnte Bestimmung der Antennen-Zeigerichtung bzw. zur Orbitbestimmung genutzt werden. In einer bevorzugten Variante sind die Rückstreu-Anordnungen ferner justierbar, d.h. die Lage der darin enthaltenen Rückstreu-Elemente und deren Ausrichtung kann verändert werden. Auf diese Weise können je nach Bedarf unterschiedliche Arten von Rückstreuzielen erzeugt werden.

Im Vorangegangenen wurde die Erfindung anhand von passiven Rückstreu-Elementen beschrieben, welche die einfallende Radarstrahlung reflektieren. In einer nicht zur Erfindung gehörigen Ausführungsform sind die Rückstreu-Elementen aktive Rückstreu-Elemente in der Form von Transpondern. Solche Transponder generieren aktiv aus der empfangenen

Radarstrahlung ein Antwortsignal, das dem reflektierten Radarecho bei passiven Rückstreu-Elementen entspricht. Die Abhängigkeit zwischen der einfallenden Radarstrahlung und der daraus erzeugten Antwort ist für die einzelnen Transponder bekannt. Die Verwendung von aktiven Transpondern ist hinlänglich aus dem Stand der Technik bekannt und beispielsweise in Dokument [3] beschrieben.

Literaturverzeichnis:
[1] M. Schwerdt et al. "Final TerraSAR-X Calibration Results Based on Novel Efficient Methods". In: IEEE Transactions on Geoscience and Remote Sensing Vol. 48.2 (Feb. 2010), pp. 677-689
[2] A. Freemann "SAR Calibration: An Overview". In: IEEE Transactions on Geoscience and Remote Sensing Vol. 30.6 (Nov. 1992), pp. 1107-1121
[3] D. Hounam et al. "A Technique for the Identification and Localization of SAR Targets Using Encoding Transponders". In: IEEE Transactions on Geoscience and Remote Sensing Vol. 39.1 (Jan. 2001), pp. 3-7
[4] Masaharu Fujita: "Development of a Retrodirective PARC for ALOS/PALSAR Calibration", IEEE Transactions on Geoscience and Remote Sensing, Bd. 41, Nr. 10, 1. Oktober 2003, Seiten 2177-2186
[5] Miguel Caro Cuenca et al.: "Deployment and design of bi-directional corner reflectros for optimal ground motion monitoring using InSAR", 10th European Conference on Synthetic Aperture Radar, 3-5 June 2014

## Patentansprüche

1. Synthetik-Apertur-Radarverfahren zur Fernerkundung der Erdoberfläche über eine Radareinrichtung (1), die sich in eine Azimut-Richtung (x) über der Erdoberfläche bewegt, wobei die Radareinrichtung (1) eine Sendeeinrichtung zum Aussenden von Radarpulsen und eine Empfangseinrichtung zum Empfang von Radarechos umfasst, wobei
- in einem vorgegebenen Betriebsmodus der Radareinrichtung (1) Radarpulse durch die Sendeeinrichtung ausgesendet und Radarechos durch die Empfangseinrichtung empfangen werden, wobei für den vorgegebenen Betriebsmodus Auflösungszellen definiert sind, welche Flächensegmente auf der Erdoberfläche mit identischen Abmessungen darstellen und die räumliche Auflösung des vorgegebenen Betriebsmodus repräsentieren;
- in dem vorgegebenen Betriebsmodus SAR-Rohdaten durch den Empfang von Radarechos erfasst werden, welche von einer oder mehreren auf der Erdoberfläche installierten Rückstreu-Anordnungen (2) aus jeweils mehreren passiven Rückstreu-Elementen (3) stammen, und sich die rückgestreuten Radarechos aller Rückstreu-Elemente (3) einer jeweiligen Rückstreu-Anordnung (2) überlagern, wobei die Rückstreu-Elemente (3) jeder Rückstreu-Anordnung (2) derart zueinander positioniert sind, dass alle Rückstreu-Elemente (3) der jeweiligen Rückstreu-Anordnung (2) innerhalb einer Auflösungszelle liegen, und wobei jede Rückstreu-Anordnung (2) einen oder mehrere vorbekannte Rückstreuparameter aufweist, wobei eine jeweilige Rückstreu-Anordnung (2) von zumindest einem Teil der Rückstreu-Anordnungen (2) mehrere Teilgruppen aus jeweils zumindest zwei Rückstreu-Elementen (3) umfasst, wobei eine jeweilige Teilgruppe durch eine Gerade (G, G') charakterisiert ist, auf der alle Rückstreu-Elemente (3) der jeweiligen Teilgruppe liegen und welche in Azimut-Richtung (x) verläuft, wobei die Geraden (G, G') von zumindest zwei Teilgruppen in Richtung senkrecht zur Azimut-Richtung (x) versetzt zueinander angeordnet sind, wobei die jeweilige Rückstreu-Anordnung (2) ein Paar von Teilgruppen umfasst, die unterschiedliche Abschnitte in Azimut-Richtung (x) abdecken und die auf Geraden angeordnet sind, welche um ¼ der Wellenlänge der Radarstrahlung der Radareinrichtung (1) in der Richtung senkrecht zur Azimut-Richtung (x) zueinander versetzt sind;
- die SAR-Rohdaten einer Signalverarbeitung unterzogen werden, welche die Erzeugung von SAR-Radarbildern der Erdoberfläche aus den SAR-Rohdaten umfasst und von dem oder den vorbekannten Rückstreuparametern abhängig ist.

2. Verfahren nach Anspruch 1, **dadurch gekennzeichnet, dass** der oder die vorbekannten Rückstreuparameter jeder Rückstreu-Anordnung (2) den Radarquerschnitt der jeweiligen Rückstreu-Anordnung (2) für die ausgesendeten Radarpulse und/oder das Rückstreudiagramm (RD) der jeweiligen Rückstreu-Anordnung (2) für die ausgesendeten Radarpulse und/oder das Phasendiagramm (PD) der jeweiligen Rückstreu-Anordnung (2) für die ausgesendeten Radarpulse und/oder die Positionen der Rückstreuzentren der Rückstreu-Elemente (3) der jeweiligen Rückstreu-Anordnung (2) auf der Erdoberfläche umfasst.

3. Verfahren nach Anspruch 1 oder 2, **dadurch gekennzeichnet, dass** die Signalverarbeitung eine Kalibrierung der SAR-Radarbilder umfasst, bei der die SAR-Radarbilder mit dem oder den vorbekannten Rückstreuparametern abgeglichen werden, wobei die Kalibrierung insbesondere eine radiometrische Kalibrierung und/oder eine geometrische Kalibrierung und/oder eine polarimetrische Kalibrierung umfasst.

4. Verfahren nach einem der vorhergehenden Ansprüche, **dadurch gekennzeichnet, dass** der oder die passiven Reflektoren einen oder mehrere Winkelreflektoren umfassen, insbesondere einen oder mehrere dihedrale Winkelreflektoren und/oder einen oder mehrere trihedrale Winkelreflektoren und/oder einen oder mehrere bruderhedrale Winkelreflektoren.

5. Verfahren nach einem der vorhergehenden Ansprüche, **dadurch gekennzeichnet, dass** alle Rückstreu-Elemente (3) einer jeweiligen Rückstreu-Anordnung (2) von zumindest einem Teil der Rückstreu-Anordnungen (3) auf einer Geraden (G) liegen, welche in Azimut-Richtung (x) verläuft.

6. Verfahren nach einem der vorhergehenden Ansprüche, **dadurch gekennzeichnet, dass** die Ausdehnung einer jeweiligen Auflösungszelle in Azimut-Richtung zwischen 0,24 m und 500 m liegt und/oder die Ausdehnung einer Auflösungszelle senkrecht zur Azimut-Richtung zwischen 0,6 m und 500 m liegt.

7. Synthetik-Apertur-Radarsystem zur Fernerkundung der Erdoberfläche, umfassend eine Radareinrichtung (1), die sich im Betrieb in eine Azimut-Richtung (x) über der Erdoberfläche bewegt, wobei die Radareinrichtung (1) eine Sendeeinrichtung zum Aussenden von Radarpulsen und eine Empfangseinrichtung zum Empfang von Radarechos umfasst, wobei das Synthetik-Apertur-System derart ausgestaltet ist, dass
- in einem vorgegebenen Betriebsmodus der Radareinrichtung (1) Radarpulse durch die Sendeeinrichtung ausgesendet und Radarechos durch die Empfangseinrichtung empfangen werden, wobei für den vorgegebenen Betriebsmodus Auflösungszellen definiert sind, welche Flächensegmente auf der Erdoberfläche mit identischen Abmessungen darstellen und die räumliche Auflösung des vorgegebenen Betriebsmodus repräsentieren;
- in dem vorgegebenen Betriebsmodus SAR-Rohdaten durch den Empfang von Radarechos erfasst werden, welche von einer oder mehreren auf der Erdoberfläche installierten Rückstreu-Anordnungen (2) aus jeweils mehreren passiven Rückstreu-Elementen (3) stammen, und sich die rückgestreuten Radarechos aller Rückstreu-Elemente (3) einer jeweiligen Rückstreu-Anordnung (2) überlagern, wobei die Rückstreu-Elemente (3) jeder Rückstreu-Anordnung (2) derart zueinander positioniert sind, dass alle Rückstreu-Elemente (3) der jeweiligen Rückstreu-Anordnung (2) innerhalb einer Auflösungszelle liegen, und wobei jede Rückstreu-Anordnung (2) einen oder mehrere vorbekannte Rückstreuparameter aufweist, wobei eine jeweilige Rückstreu-Anordnung (2) von zumindest einem Teil der Rückstreu-Anordnungen (2) mehrere Teilgruppen aus jeweils zumindest zwei Rückstreu-Elementen (3) umfasst, wobei eine jeweilige Teilgruppe durch eine Gerade (G, G') charakterisiert ist, auf der alle Rückstreu-Elemente (3) der jeweiligen Teilgruppe liegen und welche in Azimut-Richtung (x) verläuft, wobei die Geraden (G, G') von zumindest zwei Teilgruppen in Richtung senkrecht zur Azimut-Richtung (x) versetzt zueinander angeordnet sind, wobei die jeweilige Rückstreu-Anordnung (2) ein Paar von Teilgruppen umfasst, die unterschiedliche Abschnitte in Azimut-Richtung (x) abdecken und die auf Geraden angeordnet sind, welche um ¼ der Wellenlänge der Radarstrahlung der Radareinrichtung (1) in der Richtung senkrecht zur Azimut-Richtung (x) zueinander versetzt sind;
- die SAR-Rohdaten einer Signalverarbeitung unterzogen werden, welche die Erzeugung von SAR-Radarbildern der Erdoberfläche aus den SAR-Rohdaten umfasst und von dem oder den vorbekannten Rückstreuparametern abhängig ist.

8. Synthetik-Apertur-Radarsystem nach Anspruch 7, **dadurch gekennzeichnet, dass** das Synthetik-Apertur-Radarsystem zur Durchführung eines Verfahrens nach einem der Ansprüche 2 bis 6 eingerichtet ist.

## Claims

1. A synthetic aperture radar method for remote sensing of the surface of the Earth by means of a radar device (1) moving in an azimuth direction (x) above the surface of the Earth, the radar device (1) comprising transmitting device for emitting radar pulses and a receiving device for receiving radar echoes, wherein
- in a predetermined operating mode of the radar device (1), radar pulses are emitted by the transmitting device and radar echoes are received by the receiving device, wherein resolution cells are defined for the predetermined operating mode, which form surface segments on the surface of the Earth having identical dimensions and represent the spatial resolution of the predetermined operating mode;
- in the predetermined operating mode, SAR raw data are acquired by receiving radar echoes originating from one or more backscattering arrangements (2), which are installed on the surface of the Earth and each comprise a plurality of passive backscattering elements (3), and the backscattered radar echoes of all backscattering elements (3) of a respective backscattering arrangement (2) are superposed, wherein the backscattering elements (3) of each backscattering arrangement (2) are positioned relative to each other such that all backscattering elements (3) of the respective backscattering arrangement (2) are located within one resolution cell, and wherein each backscattering arrangement (2) has one or more pre-known backscatter parameters, wherein a respective backscattering arrangement (2) of at least a part of said backscattering arrangements (2) comprises several subgroups, each having at least two backscattering elements (3), wherein a respective subgroup is **characterized by** a straight line (G, G') on which all backscattering elements (3) of the respective subgroup are located and which extends in the azimuth direction (x), wherein the straight lines (G, G') of at least two subgroups are offset to one another in a direction perpendicular to the azimuth direction (x), wherein the respective backscattering arrangement (2) comprises a pair of subgroups covering different sections in the azimuth direction (x) and being arranged on straight lines which are offset to one another by ¼ of the wavelength of the radar radiation of the radar device (1) in the direction perpendicular to the azimuth direction (x);
- the SAR raw data are subjected to a signal processing which comprises the generation of SAR radar images of the surface of the Earth from the SAR raw data and is dependent on the one or more pre-known backscatter parameters.

2. The method according to claim 1, **characterized in that** the pre-known one or more backscatter parameters of each backscattering arrangement (2) comprise the radar cross-section of the respective backscattering arrangement (2) for the emitted radar pulses and/or the backscatter diagram (RD) of the respective backscattering arrangement (2) for the emitted radar pulses and/or the phase diagram (PD) of the respective backscattering arrangement (2) for the emitted radar pulses and/or the positions of the backscattering centers of the backscattering elements (3) of the respective backscattering arrangement (2) on the surface of the Earth.

3. The method according to claim 1 or 2, **characterized in that** the signal processing comprises a calibration of the SAR radar images, in which the SAR radar images are matched with the one or more pre-known backscatter parameters, wherein the calibration comprises in particular a radiometric calibration and/or a geometric calibration and/or a polarimetric calibration.

4. The method according to one of the preceding claims, **characterized in that** the one or more passive reflectors comprise one or more corner reflectors, in particular one or more dihedral corner reflectors and/or one or more trihedral corner reflectors and/or one or more bruderhedral corner reflectors.

5. The method according to one of the preceding claims, **characterized in that** all backscattering elements (3) of a respective backscattering arrangement (2) of at least a part of the backscattering arrangements (2) are located on a straight line (G) extending in azimuth direction (x).

6. The method according to one of the preceding claims, **characterized in that** the extension of a respective resolution cell in the azimuth direction is between 0.24 m and 500 m and/or the extension of a resolution cell perpendicular to the azimuth direction is between 0.6 m and 500 m.

7. A synthetic aperture radar system for remote sensing of the surface of the Earth, comprising a radar device (1) which, during operation, moves in an azimuth direction (x) above the surface of the Earth, wherein the radar device (1) comprises a transmitting device for emitting radar pulses and a receiving device for receiving radar echoes, wherein the synthetic aperture radar system is configured such that
- in a predetermined operating mode of the radar device (1), radar pulses are emitted by the transmitting device and radar echoes are received by the receiving device, wherein resolution cells are defined for the predetermined operating mode, which form surface segments on the surface of the Earth having identical dimensions and represent the spatial resolution of the predetermined operating mode;
- in the predetermined operating mode, SAR raw data are acquired by receiving radar echoes originating from one or more backscattering arrangements (2), which are installed on the surface of the Earth and each comprise a plurality of passive backscattering elements (3), and the backscattered radar echoes of all backscattering elements (3) of a respective backscattering arrangement (2) are superposed, wherein the backscattering elements (3) of each backscattering arrangement (2) are positioned relative to each other such that all backscattering elements (3) of the respective backscattering arrangement (2) are located within one resolution cell, and wherein each backscattering arrangement (2) has one or more pre-known backscatter parameters, wherein a respective backscattering arrangement (2) of at least a part of said backscattering arrangements (2) comprises several subgroups, each having at least two backscattering elements (3), wherein a respective subgroup is **characterized by** a straight line (G, G') on which all backscattering elements (3) of the respective subgroup are located and which extends in the azimuth direction (x), wherein the straight lines (G, G') of at least two subgroups are offset to one another in a direction perpendicular to the azimuth direction (x), wherein the respective backscattering arrangement (2) comprises a pair of subgroups covering different sections in the azimuth direction (x) and being arranged on straight lines which are offset to one another by ¼ of the wavelength of the radar radiation of the radar device (1) in the direction perpendicular to the azimuth direction (x);
- the SAR raw are subjected to a signal processing which comprises the generation of SAR radar images of the surface of the Earth from the SAR raw data and is dependent on the one or more pre-known backscatter parameters.

8. The synthetic aperture radar system according to claim 7, **characterised in that** the synthetic aperture radar system is configured to carry out a method according to one of claims 2 to 6.

## Revendications

1. Procédé de radar à synthèse d'ouverture pour la télédétection de la surface terrestre par le biais d'une installation radar (1) qui se déplace dans une direction azimutale (x) au-dessus de la surface terrestre, dans lequel l'installation radar (1) comprend une installation d'émission pour l'émission d'impulsions radar et une installation de réception pour la réception d'échos radar, dans lequel
- dans le mode d'exploitation prédéfini de l'installation radar (1), des impulsions radar sont émises par l'installation d'émission et des échos radar sont reçus par l'installation de réception, dans lequel des cellules de résolution sont définies pour le mode d'exploitation prédéfini, lesquelles représentent des segments de surface sur la surface terrestre avec des dimensions identiques et représentent la résolution spatiale du mode d'exploitation prédéfini ;
- dans le mode d'exploitation prédéfini, des données brutes de RSO sont détectées par la réception d'échos radar qui proviennent d'un ou plusieurs agencements de rétrodiffusion (2) installés sur la surface terrestre, constitués respectivement de plusieurs éléments de rétrodiffusion passifs (3), et les échos radar rétrodiffusés de tous les éléments de rétrodiffusion (3) d'un agencement de rétrodiffusion respectif (2) se superposent, dans lequel les éléments de rétrodiffusion (3) de chaque agencement de rétrodiffusion (2) sont positionnés l'un par rapport à l'autre de telle sorte que tous les éléments de rétrodiffusion (3) de l'agencement de rétrodiffusion respectif (2) se situent au sein d'une cellule de résolution, et dans lequel chaque agencement de rétrodiffusion (2) présente un ou plusieurs paramètres de rétrodiffusion connus au préalable, dans lequel un agencement de rétrodiffusion respectif (2) d'au moins une partie des agencements de rétrodiffusion (2) comprend plusieurs groupes partiels constitués respectivement d'au moins deux éléments de rétrodiffusion (3), dans lequel un groupe partiel respectif est **caractérisé par** une droite (G, G') sur laquelle tous les éléments de rétrodiffusion (3) du groupe partiel respectif se situent et qui s'étend dans la direction azimutale (x), dans lequel les droites (G, G') d'au moins deux groupes partiels sont disposées de manière décalée l'une par rapport à l'autre dans une direction perpendiculaire à la direction azimutale (x), dans lequel l'agencement de rétrodiffusion respectif (2) comprend une paire de groupes partiels qui couvrent différentes sections en direction azimutale (x) et qui sont disposés sur des droites qui sont décalées l'une par rapport à l'autre d'un ¼ de la longueur d'onde du rayonnement radar de l'installation radar (1) dans la direction perpendiculaire à la direction azimutale (x) ;
- les données brutes de RSO sont soumises à un traitement de signal qui comprend la génération d'images radar de RSO de la surface terrestre à partir des données brutes de RSO et est dépendant du ou des paramètres de rétrodiffusion connus au préalable.

2. Procédé selon la revendication 1, **caractérisé en ce que** le ou les paramètres de rétrodiffusion connus au préalable de chaque agencement de rétrodiffusion (2) comprend la section transversale de radar de l'agencement de rétrodiffusion respectif (2) pour les impulsions radar émises et/ou le diagramme de rétrodiffusion (RD) de l'agencement de rétrodiffusion respectif (2) pour les impulsions radar émises et/ou le diagramme de phase (PD) de l'agencement de rétrodiffusion respectif (2) pour les impulsions radar émises et/ou les positions des centres de rétrodiffusion des éléments de rétrodiffusion (3) de l'agencement de rétrodiffusion respectif (2) sur la surface terrestre.

3. Procédé selon la revendication 1 ou 2, **caractérisé en ce que** le traitement de signal comprend un étalonnage des images radar de RSO lors duquel les images radar de RSO sont étalonnées avec le ou les paramètres de rétrodiffusion connus au préalable, dans lequel l'étalonnage comprend notamment un étalonnage radiométrique et/ou un étalonnage géométrique et/ou un étalonnage polarimétrique.

4. Procédé selon une des revendications précédentes, **caractérisé en ce que** le ou les réflecteurs passifs comprennent un ou plusieurs réflecteurs angulaires, notamment un ou plusieurs réflecteurs angulaires dièdres et/ou un ou plusieurs réflecteurs angulaires trièdres et/ou un ou plusieurs réflecteurs angulaires polyèdres.

5. Procédé selon une des revendications précédentes, **caractérisé en ce que** tous les éléments de rétrodiffusion (3) d'un agencement de rétrodiffusion respectif (2) d'au moins une partie des agencements de rétrodiffusion (3) se situent sur une droite (G) qui s'étend dans la direction azimutale (x).

6. Procédé selon une des revendications précédentes, **caractérisé en ce que** l'étendue d'une cellule de résolution respective dans la direction azimutale se situe entre 0,24 m et 500 m et/ou l'étendue d'une cellule de résolution perpendiculairement à la direction azimutale se situe entre 0,6 m et 500 m.

7. Système de radar à synthèse d'ouverture pour la télédétection de la surface terrestre, comprenant une installation radar (1) qui se déplace en fonctionnement dans une direction azimutale (x) au-dessus de la surface terrestre, dans lequel l'installation radar (1) comprend une installation d'émission pour l'émission d'impulsions radar et une installation de réception pour la réception d'échos radar, dans lequel le système à synthèse d'ouverture est configuré de telle sorte que
- dans le mode d'exploitation prédéfini de l'installation radar (1), des impulsions radar sont émises par l'installation d'émission et des échos radar sont reçus par l'installation de réception, dans lequel des cellules de résolution sont définies pour le mode d'exploitation prédéfini, lesquelles représentent des segments de surface sur la surface terrestre avec des dimensions identiques et représentent la résolution spatiale du mode d'exploitation prédéfini ;
- dans le mode d'exploitation prédéfini, des données brutes de RSO sont détectées par la réception d'échos radar qui proviennent d'un ou plusieurs agencements de rétrodiffusion (2) installés sur la surface terrestre, constitués respectivement de plusieurs éléments de rétrodiffusion passifs (3), et les échos radar rétrodiffusés de tous les éléments de rétrodiffusion (3) d'un agencement de rétrodiffusion respectif (2) se superposent, dans lequel les éléments de rétrodiffusion (3) de chaque agencement de rétrodiffusion (2) sont positionnés l'un par rapport à l'autre de telle sorte que tous les éléments de rétrodiffusion (3) de l'agencement de rétrodiffusion respectif (2) se situent au sein d'une cellule de résolution, et dans lequel chaque agencement de rétrodiffusion (2) présente un ou plusieurs paramètres de rétrodiffusion connus au préalable, dans lequel un agencement de rétrodiffusion respectif (2) d'au moins une partie des agencements de rétrodiffusion (2) comprend plusieurs groupes partiels constitués respectivement d'au moins deux éléments de rétrodiffusion (3), dans lequel un groupe partiel respectif est **caractérisé par** une droite (G, G') sur laquelle tous les éléments de rétrodiffusion (3) du groupe partiel respectif se situent et qui s'étend dans la direction azimutale (x), dans lequel les droites (G, G') d'au moins deux groupes partiels sont disposées de manière décalée l'une par rapport à l'autre dans une direction perpendiculaire à la direction azimutale (x), dans lequel l'agencement de rétrodiffusion respectif (2) comprend une paire de groupes partiels qui couvrent différentes sections en direction azimutale (x) et qui sont disposés sur des droites qui sont décalées l'une par rapport à l'autre d'un ¼ de la longueur d'onde du rayonnement radar de l'installation radar (1) dans la direction perpendiculaire à la direction azimutale (x) ;
- les données brutes de RSO sont soumises à un traitement de signal qui comprend la génération d'images radar de RSO de la surface terrestre à partir des données brutes de RSO et est dépendant du ou des paramètres de rétrodiffusion connus au préalable.

8. Système de radar à synthèse d'ouverture selon la revendication 7, **caractérisé en ce que** le système de radar à synthèse d'ouverture est configuré pour la réalisation d'un procédé selon une des revendications 2 à 6.
